# EUROPÄISCHE PATENTSCHRIFT

(11) **EP 2 074 352 B1**
(45) Veröffentlichungstag und Bekanntmachung des Hinweises auf die Patenterteilung: **10.05.2017**
(21) Anmeldenummer: 07818721.8
(22) Anmeldetag: 05.10.2007
(51) Int. Cl.: F21V 31/03

(54) **KRAFTFAHRZEUGLEUCHTE**
MOTOR VEHICLE LAMP
BLOC OPTIQUE DE VÉHICULE AUTOMOBILE

(30) Priorität: 16.11.2006 DE 102006054019
(43) Veröffentlichungstag der Anmeldung: 01.07.2009
(73) Patentinhaber: Bayerische Motoren Werke Aktiengesellschaft, 80809 München (DE)
(72) Erfinder: ERDL, Helmut, 83569 Vogtareuth (DE); ENDERS, Martin, 82041 Deisenhofen (DE)
(74) Vertreter: Mayer-Martin, Christian
(86) Internationale Anmeldenummer: PCT/EP2007/008644
(87) Internationale Veröffentlichungsnummer: WO 2008/058598

(56) Entgegenhaltungen:
- DE-A1- 3 319 411
- DE-A1- 4 304 789
- DE-A1- 19 726 328

## Beschreibung

Die Erfindung betrifft eine Kraftfahrzeugleuchte, insbesondere einen Kraftfahrzeugscheinwerfer.

Eine wesentliche Anforderung an moderne Kraftfahrzeugscheinwerfer ist deren Wasserdichtigkeit. Eine andere dieser Anforderung entgegenstehende Anforderung an Kraftfahrzeugscheinwerfer ist die Möglichkeit eines einfachen Austauschs einer defekten Lichtquelle im Gehäuse des Kraftfahrzeugscheinwerfers. Um beide Anforderungen zu erfüllen, ist es bekannt, das Gehäuse eines Kraftfahrzeugscheinwerfers mit einer Öffnung für den Austausch der Lichtquelle auszustatten. Diese Öffnung kann dann beispielsweise durch einen wasserdichten Drehverschlussdeckel verschlossen und wieder geöffnet werden, um auch einem Fahrzeugnutzer einen Austausch der Lichtquelle zu ermöglichen.

Der rasante technologische Fortschritt auf dem Gebiet der Fahrzeugleuchten führte in den letzen Jahren zu einer zunehmenden Integration feuchtigkeitsempfindlicher Komponenten und Funktionen in einer Fahrzeugleuchte. Untersuchungen zeigen, dass die durch den genannten Drehverschlussdeckel gewährleistete Wasserdichtigkeit aus verschiedenen Gründen nicht ausreichend ist oder nicht zuverlässig genug ist. Dies gilt insbesondere für den Fall, dass ein Fahrzeugnutzer den Drehverschlussdeckel selbst öffnet und - möglicherweise nicht ganz korrekt - wieder schließt. Dies kann im Ergebnis zu einem Mangel der Fahrzeugleuchte auf Grund eines Feuchtigkeitseintritts führen.

Aus der DE19726328A1 ist eine Kraftfahrzeugleuchte mit einem Gehäuse, einer Lichtquelle und einer Öffnung bekannt.

Der Erfindung liegt die Aufgabe zugrunde, eine technische Lehre zum wasserdichten Verschließen eines Gehäuses einer Kraftfahrzeugleuchte anzugeben.

Diese Aufgabe wird durch die Merkmale des unabhängigen Anspruchs gelöst. Vorteilhafte Weiterbildungen der Erfindung sind den abhängigen Ansprüchen zu entnehmen.

Die Erfindung basiert demnach auf dem Gedanken, eine Öffnung im Gehäuse einer Kraftfahrzeugleuchte durch ein Einfach-Verschlusselement, wie beispielsweise eine Folie, zu verschließen. Dadurch ist die Öffnung zuverlässig gegen Feuchtigkeitseintritt geschützt. Zudem wirkt das Einfach-Verschlusselement gleichzeitig als Siegel, da ein Öffnen oder Entfernen des Einfach-Verschlusselementes nicht reversibel ist. Ein geöffnetes oder entferntes Einfach-Verschlusselement weist daher auf einen Fremdeingriff hin. Durch diese Information können Unsicherheiten hinsichtlich der Ursache des Feuchtigkeitseintritts zumindest reduziert werden. Ein weiterer Vorteil liegt in der vereinfachten Serienfertigung der Kraftfahrzeug leuchte, bei der die Herstellung und Integration eines Mehrfach-Verschlusselementes nicht mehr zwingend erforderlich ist.

Erfindungsgemäß ist eine Kraftfahrzeugleuchte mit einem Gehäuse, mit mindestens einer Lichtquelle in dem Gehäuse und mit mindestens einer Öffnung, insbesondere zum Austausch der Lichtquelle oder zur Einstellung der Kraftfahrzeugleuchte, ausgestattet. Zum wasserdichten Verschließen der Öffnung ist ein Einfach-Verschlusselement mit dem Gehäuse verbunden. Das Einfach-Verschlusselement ist derart mit dem Gehäuse verbunden, dass es nicht zerstörungsfrei von dem Gehäuse lösbar ist.

Besonders bevorzugt weist die Kraftfahrzeugleuchte zudem einen um die Öffnung verlaufenden Kragen (innerhalb oder außerhalb des Einfach-Verschlusselementes) auf, der zur Befestigung eines Mehrfach-Verschlusselementes hergerichtet ist. Dadurch wird es möglich, ein geöffnetes, zerstörtes oder entferntes Einfach-Verschlusselement durch ein, insbesondere wasserdichtes oder im Wesentlichen wasserdichtes, Mehrfach-Verschlusselement funktional zu ersetzen. Die Öffnung kann dadurch auf einfache Weise, beispielsweise durch den Fahrzeughalter selbst, wieder zuverlässig oder möglichst zuverlässig wasserdicht verschlossen werden. Der Hinweis auf den Fremdeingriff bleibt aber durch das geöffnete oder entfernte Einfach-Verschlusselement erkennbar. Das Mehrfach-Verschlusselement kann beispielsweise unabhängig von der Kraftfahrzeugleuchte lediglich als Ersatzteil hergestellt und vertrieben werden.

Gemäß einer bevorzugten Ausführungsform ist, insbesondere zusätzlich zum Einfach-Verschlusselement, ein Mehrfach-Verschlusselement zum wasserdichten oder im Wesentlichen wasserdichten Verschließen der Öffnung vorgesehen. Das Mehrfach-Verschlusselement ist insbesondere derart mit dem Gehäuse verbunden, dass es zerstörungsfrei oder im Wesentlichen zerstörungsfrei von dem Gehäuse lösbar ist. Es ist dann wieder derart mit dem Gehäuse verbindbar, dass die Öffnung wasserdicht oder im Wesentlichen wasserdicht verschlossen ist.

Durch einen solchen Verschluss einer Öffnung durch zwei verschiedene Verschlusselemente wird eine besonders zuverlässige Wasserdichtigkeit erreicht. Fehlbedienungen, Materialermüdungen oder -beschädigungen bei dem Mehrfach-Verschlusselement führen nicht mehr zu einem Feuchtigkeitseintritt in das Gehäuse. Außerdem weist ein geöffnetes oder entferntes Einfach-Verschlusselement auf einen Fremdeingriff hin. Zudem wird erreicht, dass beispielsweise ein Fahrzeugnutzer selbst eine defekte Lichtquelle austauschen kann und anschließend die entsprechende Öffnung wieder selbst durch das Mehrfach-Verschlusselement wasserdicht verschließen kann. Dieser Eingriff wird aber durch die Zerstörung oder Entfernung des Einfach-Verschlusselementes dokumentiert.

Besonders bevorzugt ist dabei vorgesehen, dass das Mehrfach-Verschlusselement derart mit dem Gehäuse verbunden ist, dass die durch das Einfach-Verschlusselement verschlossene Öffnung zusätzlich durch das Mehrfach-Verschlusselement verschlossen wird. Das Mehrfach-Verschlusselement ist dabei vorzugsweise über dem Einfach-Verschlusselement oder weiter außen als das Einfach-Verschlusselement angeordnet.

Alternativ dazu ist dabei vorgesehen, dass das Einfach-Verschlusselement derart mit dem Gehäuse verbunden ist, dass die durch das Mehrfach-Verschlusselement verschlossene Öffnung zusätzlich durch das Einfach-Verschlusselement verschlossen wird. Das Einfach-Element ist dabei vorzugsweise über dem Mehrfachverschluss -Verschlusselement oder weiter außen als das Mehrfach-Verschlusselement angeordnet.

Vorteilhafterweise umfasst die Fahrzeugleuchte eine erste Lichtquelle, insbesondere ein Lichtmodul, eine Gasentladungslampe oder eine Leuchtdiode, und eine erste Öffnung zum Austausch der ersten Lichtquelle, wobei die erste Öffnung durch ein Einfach-Verschlusselement verschlossen ist oder wird, und vorzugsweise nicht durch ein Mehrfach-Verschlusselement verschlossen ist oder wird. Denn dann, wenn es sich um eine Lichtquelle (erste Lichtquelle) handelt, für die eine Austauschmöglichkeit durch einen Nutzer nicht vorgeschrieben ist, ist ein Einfach-Verschlusselement zum Verschließen der Öffnung ausreichend. Ein Austausch der ersten Lichtquelle und ein erneuter Verschluss der ersten Öffnung durch ein Ersatz- Einfach-Verschlusselement kann dann in einer, insbesondere autorisierten, Fachwerksatt durchgeführt werden.

Alternativ oder ergänzend dazu umfasst die Fahrzeugleuchte eine zweite Lichtquelle, insbesondere eine Glühlampe, und eine zweite Öffnung zum Austausch der zweiten Lichtquelle, wobei die zweite Öffnung durch ein Mehrfach-Verschlusselement und vorzugsweise zusätzlich durch ein Einfach-Verschlusselement verschlossen ist oder wird. Denn dann, wenn es sich um eine Lichtquelle (zweite Lichtquelle) handelt, für die eine Austauschmöglichkeit durch einen Nutzer vorgeschrieben ist, ist ein Einfach-Verschlusselement zum Verschließen der Öffnung nicht mehr ausreichend. Ein erneuter Verschluss der zweiten Öffnung nach einem Austausch der zweiten Lichtquelle beispielsweise durch einen Fahrzeugnutzer erfolgt dann beispielsweise lediglich durch das Mehrfach-Verschlusselement durch den Fahrzeugnutzer.

Vorteilhafterweise umfasst das Gehäuse einen die Öffnung umlaufenden nach außen ragenden ersten Kragen, mit dem das Einfach-Verschlusselement verbunden oder verbindbar ist.

Alternativ oder ergänzend dazu umfasst das Gehäuse einen, gegebenenfalls innerhalb oder außerhalb des ersten Kragens, um die Öffnung verlaufenden nach außen ragenden zweiten Kragen, mit dem das Mehrfach-Verschlusselement verbunden oder verbindbar ist.

Das Einfach-Verschlusselement umfasst vorzugsweise einen Kunststoffdeckel, eine Folie oder ist als Folie ausgeführt. Das Mehrfach-Verschlusselement umfasst vorzugsweise einen Schraub-, Rast-, Schnapp- oder Klemmverschluss.

Im Rahmen der Erfindung liegt auch eine Kraftfahrzeugleuchte, bei der das Gehäuse alternativ oder ergänzend zu der ersten und/oder zweiten Lichtquelle einen Schrittmotor, einen Gleichstrommotor, eine Elektronik und/oder ein Kabel etc. umfasst, die alternativ oder ergänzend zu der ersten und/oder zweiten Lichtquelle durch die Öffnung ausgetauscht werden können.

Im Folgenden wird die Erfindung anhand von Beispielen unter Bezugnahme auf die folgenden Figuren näher erläutert:
- Figur 1: zeigt in Schnittdarstellung einen Ausschnitt eines Kraftfahrzeugleuchten-Gehäuses samt Folie;
- Figur 2: zeigt in Schnittdarstellung einen Ausschnitt eines Kraftfahrzeugleuchten-Gehäuses samt Folie und Verschluss-Deckel;
- Figur 3: zeigt in Schnittdarstellung einen Ausschnitt eines Kraftfahrzeugleuchten-Gehäuses samt Folie und Verschluss-Deckel;
- Figur 4: zeigt in Schnittdarstellung einen Ausschnitt eines Kraftfahrzeugleuchten-Gehäuses samt kombiniertem Folien-Deckel-Verschluss;
- Figur 5: zeigt in Schnittdarstellung einen Ausschnitt eines Kraftfahrzeugleuchten-Gehäuses samt Folie.

Gleiche Bezugszeichen bezeichnen in den verschiedenen Figuren entsprechende Elemente, die aber verschieden ausgeführt sein können.

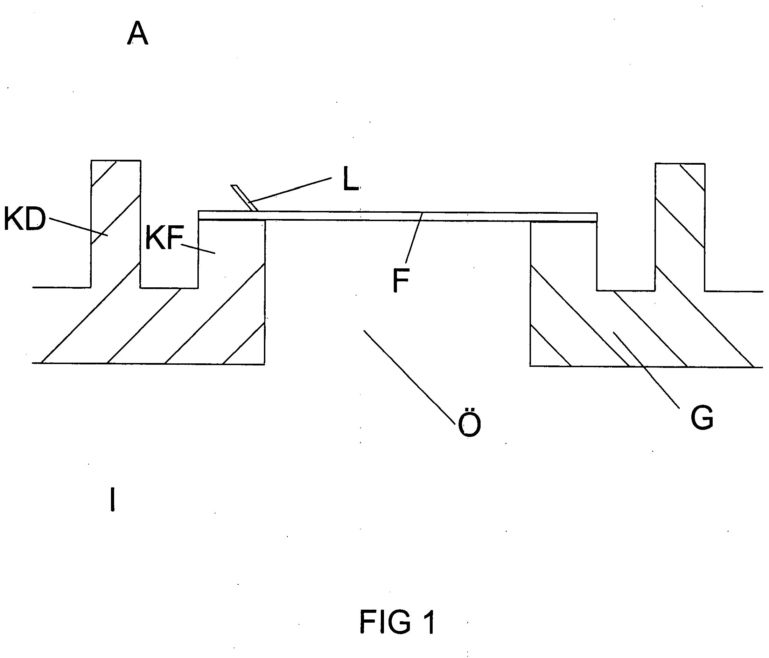

Figur 1 zeigt in Schnittdarstellung einen Ausschnitt eines Kraftfahrzeugleuchten-Gehäuses G. Das Gehäuse G weist eine Öffnung Ö zum Austausch einer im Inneren I des Gehäuses G angeordneten Lichtquelle (nicht dargestellt) auf.

Zudem weist das Gehäuse G einen um die Öffnung Ö verlaufenden nach außen A ragenden ersten Kragen KF auf, mit dem als Einfach-Verschlusselement eine Folie F umlaufend verbunden ist, um die Öffnung Ö wasserdicht zu verschließen.

Mit einem zweiten umlaufenden nach außen ragenden Kragen KD ist als Mehrfach-Verschlusselement ein Drehverschluss-Deckel (nicht dargestellt) verbindbar. Nach dem Entfernen der Folie F durch einen Nutzer durch ein Ziehen an der Lasche L und dem anschließenden Austausch einer defekten Lichtquelle durch den Nutzer kann die Öffnung Ö durch den Nutzer durch einen Drehverschluss-Deckel (nicht dargestellt) wieder wasserdicht verschlossen werden.

Die Folie F kann beispielsweise durch ein Laserschweißverfahren mit dem Gehäuse G verbunden sein. Dieses Laserschweißverfahren beruht darauf, dass ein der Laserquelle zugewandter Fügepartner eine für das Licht der Laserquelle, das eine spezifische Wellenlänge aufweist, ausreichende Transparenz besitzt, so dass die Strahlung den darunter liegenden Fügepartner erreicht, wo sie absorbiert wird. Infolge dieser Absorption wird Wärme freigesetzt, so dass im Kontaktbereich der Fügepartner nicht nur das absorbierende, sondern auch das transparente Material lokal aufschmelzen und sich partiell vermischen, wodurch nach Abkühlen ein Verbund erzeugt wird. Beide Teile werden im Ergebnis auf diese Weise miteinander verschweißt. Hierzu sind das Material und/oder die Farbe des Gehäuses und/oder der Folie derart ausgewählt, dass die Erhitzung mittels des Lasers effizient realisiert werden kann. Der den umlaufenden Rand des Gehäuses G, insbesondere der den Kragen KF, bedeckende Teil der Folie F ist dabei vorzugsweise im Wesentlichen, insbesondere hinsichtlich des Strahlungsflusses für mehr als 50%, für mehr als 60%, für mehr als 70%, für mehr als 80% oder für mehr als 90% der Laserstrahlen, insbesondere der das Verschweißen bewirkenden Laserstrahlen, transparent ausgeführt.

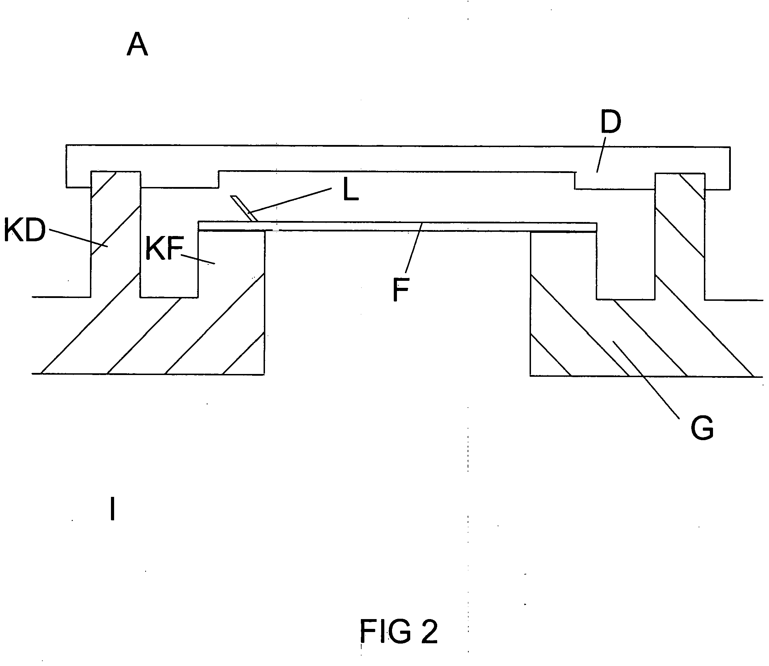

Figur 2 zeigt wieder in Schnittdarstellung einen Ausschnitt eines Kraftfahrzeugleuchten-Gehäuses G samt Folie F. In diesem Fall ist der zweite umlaufende Kragen KD mit dem Drehverschluss-Deckel D wasserdicht und lösbar verbunden.

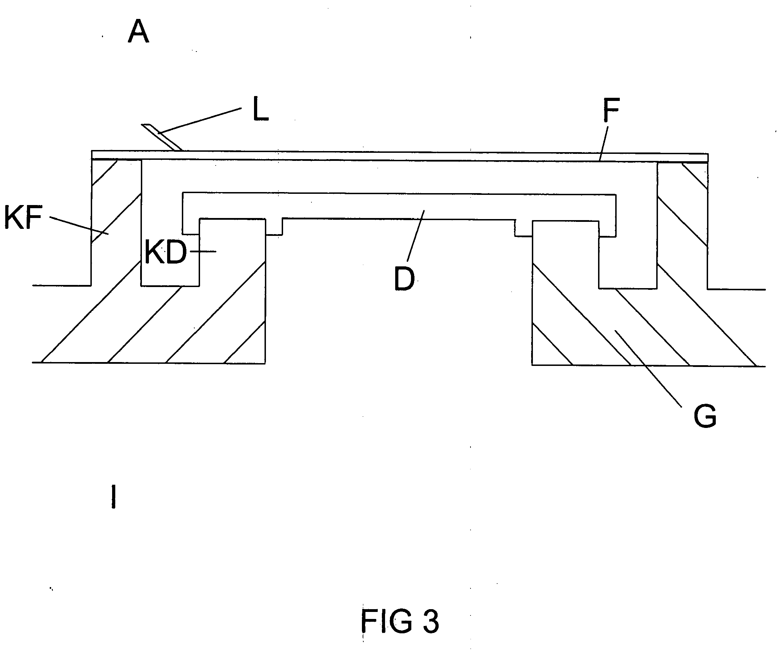

Figur 3 zeigt wieder in Schnittdarstellung einen Ausschnitt eines Kraftfahrzeugleuchten-Gehäuses G samt Folie F und Verschluss-Deckel D, wobei diesmal - im Gegensatz zum Gegenstand gemäß Figur 2 - die Folie F weiter außen angeordnet ist als der Verschluss-Deckel D.

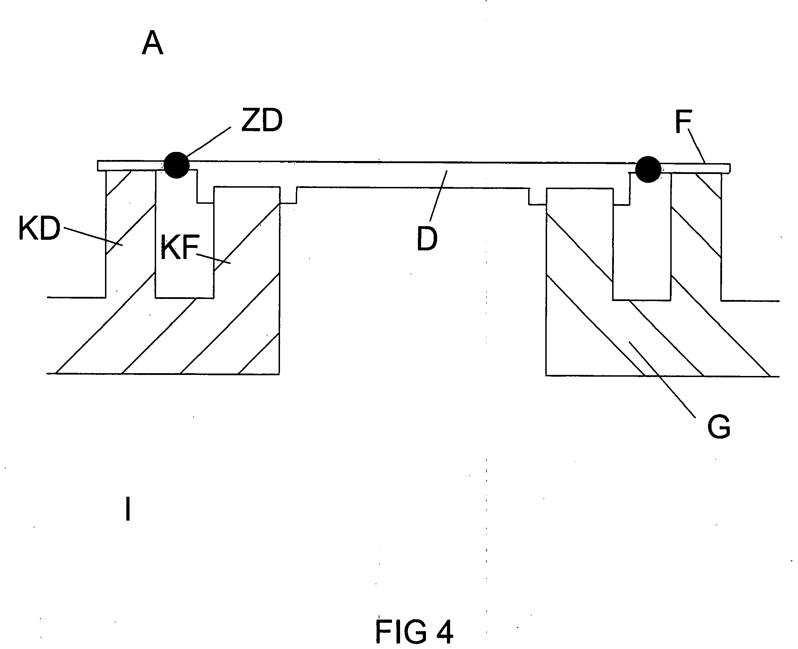

Figur 4 zeigt in Schnittdarstellung einen Ausschnitt eines Kraftfahrzeugleuchten-Gehäuses G samt kombiniertem Folien-Deckel-Verschluss. Insbesondere ist dabei die Folie F und der Deckel D derart einstückig ausgeführt, dass bei einer Öffnung des Drehverschluss-Deckels D automatisch die Folie F entfernt, zerstört oder geöffnet wird. Alternativ oder ergänzend dazu ist vorgesehen, dass die Folie F und der Deckel D derart einstückig ausgeführt sind, dass ein Öffnen des Deckels D eine Öffnung oder Zerstörung der Folie F, beispielsweise durch ein Ziehen an einem Zugdraht ZD, voraussetzt.

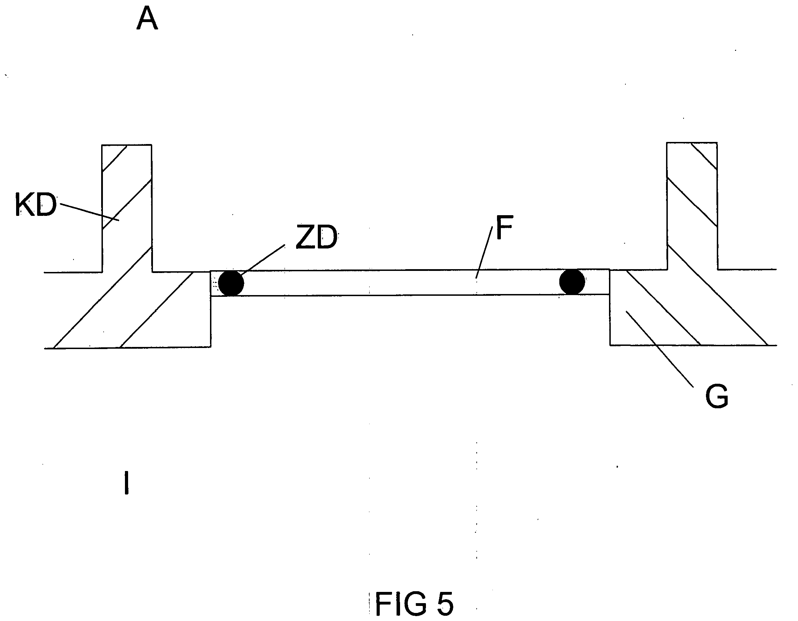

Figur 5 zeigt wieder in Schnittdarstellung einen Ausschnitt eines Kraftfahrzeugleuchten-Gehäuses G. Das Gehäuse G weist einen um die Öffnung Ö verlaufenden nach außen A ragenden Kragen KD auf, mit dem als Mehrfach-Verschlusselement beispielsweise ein Deckel verbindbar ist.

Die Öffnung Ö ist aber nach der Serienfertigung nur durch eine Folie F wasserdicht verschlossen, die beispielsweise durch ein Ziehen an einem Zugdraht ZD zerstört oder entfernt werden kann.

Besonders bevorzugt ist das Gehäuse G zusammen mit dem Einfach-Verschlusselement F einstückig ausgeführt, wobei das Einfach-Verschlusselement F in diesem Fall einfach ein Teil des Gehäuses G sein kann und beispielsweise auch aus dem gleichen Material wie das Gehäuse hergestellt sein kann. Insbesondere die Außenseite des Gehäuses kann dadurch auch im Bereich der Öffnung Ö im Wesentlichen bündig ausgeführt sein. Der Zugdraht kann auch durch ein anderes, leicht trennbares Material, eine entsprechende wasserdichte Quasi-Perforation oder eine Einstanzung des Gehäuses ersetzt sein, die eine wasserdichte "Sollbruchstelle" zur Trennung des Einfach-Verschlusselementes F von dem Gehäuse definieren.

## Patentansprüche

1. Kraftfahrzeugleuchte
- mit einem Gehäuse (G),
- mit mindestens einer Lichtquelle in dem Gehäuse (G),
- mit einer Öffnung (Ö) zum Austausch der Lichtquelle und
- mit einem Mehrfach-Verschlusselement (D) zum wasserdichten Verschließen der Öffnung (Ö), und
- zusätzlich mit einem Einfach-Verschlusselement (F) zum wasserdichten Verschließen der Öffnung (Ö), das derart mit dem Gehäuse verbunden ist, dass es nicht zerstörungsfrei von dem Gehäuse lösbar ist.

2. Kraftfahrzeugleuchte nach Anspruch 1,
bei der das Mehrfach-Verschlusselement (D) derart mit dem Gehäuse (G) verbunden ist, dass die durch das Einfach-Verschlusselement (F) verschlossene Öffnung (Ö) zusätzlich durch das Mehrfach-Verschlusselement (D) verschlossen wird.

3. Kraftfahrzeugleuchte nach einem der vorhergehenden Ansprüche,
bei der das Einfach-Verschlusselement (F) derart mit dem Gehäuse (G) verbunden ist, dass die durch das Mehrfach-Verschlusselement (D) verschlossene Öffnung (Ö) zusätzlich durch das Einfach-Verschlusselement (F) verschlossen wird.

4. Kraftfahrzeugleuchte nach einem der vorhergehenden Ansprüche mit einer ersten Lichtquelle und
mit einer ersten Öffnung (Ö) zum Austausch der ersten Lichtquelle, wobei die erste Öffnung (Ö) durch ein Einfach-Verschlusselement (F) verschlossen ist oder wird.

5. Kraftfahrzeugleuchte nach einem der vorhergehenden Ansprüche,
mit einer zweiten Lichtquelle und
mit einer zweiten Öffnung (Ö) zum Austausch der zweiten Lichtquelle, wobei die zweite Öffnung (Ö) durch ein Mehrfach-Verschlusselement (D) und ein Einfach-Verschlusselement (F) verschlossen ist oder wird.

6. Kraftfahrzeugleuchte nach einem der vorhergehenden Ansprüche,
bei der das Gehäuse (G) einen die Öffnung (Ö) umlaufenden nach außen ragenden ersten Kragen (KF) aufweist, mit dem das Einfach-Verschlusselement (F) verbunden oder verbindbar ist.

7. Kraftfahrzeugleuchte nach einem der vorhergehenden Ansprüche,
bei der das Gehäuse (G) einen die Öffnung umlaufenden nach außen ragenden zweiten Kragen (KD) aufweist, mit dem das Mehrfach-Verschlusselement (D) verbunden oder verbindbar ist.

8. Kraftfahrzeugleuchte nach einem der vorhergehenden Ansprüche,
bei der das Einfach-Verschlusselement eine Folie (F) umfasst.

9. Kraftfahrzeugleuchte nach einem der vorhergehenden Ansprüche,
bei der das Mehrfach-Verschlusselement einen Schraub-, Rast-, Schnapp- oder Klemmverschluss umfasst.

## Claims

1. A motor vehicle light, having
- a housing (G),
- at least one light source in the housing (G),
- an opening (Ö) for replacing the light source and
- a multiple closure element (D) for the water-tight closure of the opening (Ö), and
- in addition a single closure element (F) for the water-tight closure of the opening (Ö), which single closure element is connected to the housing such that it cannot be detached from the housing without being destroyed.

2. A motor vehicle light according to claim 1, wherein the multiple closure element (D) is connected to the housing (G) such that the opening (Ö), closed by the single closure element (F), is also closed by the multiple closure element (D).

3. A motor vehicle light according to any of the preceding claims, wherein the single closure element (F) is connected to the housing (G) such that the opening (Ö), closed by the multiple closure element (D), is also closed by the single closure element (F).

4. A motor vehicle light according to any of the preceding claims, having a first light source and having a first opening (Ö) for replacing the first light source, wherein the first opening (Ö) is closed or will be closed by a single closure element (F).

5. A motor vehicle light according to any of the preceding claims, having a second light source and having a second opening (Ö) for replacing the second light source, wherein the second opening (Ö) is closed or will be closed by a multiple closure element (D).and by a single closure element (F).

6. A motor vehicle light according to any of the preceding claims, wherein the housing (G) has an outwardly projecting first collar (KF) which runs around the opening (Ö) and to which the single closure element (F) is connected or can be connected.

7. A motor vehicle light according to any of the preceding claims, wherein the housing (G) has an outwardly projecting second collar (KD) which runs around the opening and to which the multiple closure element (D) is connected or can be connected.

8. A motor vehicle light according to any of the preceding claims, wherein the single closure element (F) comprises a sheet (F).

9. A motor vehicle light according to any of the preceding claims, wherein the multiple closure element comprises a screw closure, a catch closure, a snap closure or a clamping closure.

## Revendications

1. Feu de véhicule automobile comprenant :
- un boîtier (G),
- au moins une source de lumière logée dans le boîtier (G),
- une ouverture (Ö) pour permettre de changer la source de lumière, et
- un élément de fermeture à usages multiples (D) pour permettre de fermer l'ouverture (Ö) de façon étanche à l'eau, ainsi qu'en outre,
- un élément de fermeture à usage unique (F) pour permettre de fermer l'ouverture (Ö) de façon étanche à l'eau qui est relié au boîtier de façon à ne pas pouvoir être extrait de celui-ci sans être endommagé.

2. Feu de véhicule automobile conforme à la revendication 1,
selon lequel l'élément de fermeture à usages multiples (D) est relié au boîtier (G) de sorte que l'ouverture (Ö) fermée par l'élément de fermeture à usage unique (F) soit en outre fermée par cet élément de fermeture à usages multiples (D).

3. Feu de véhicule automobile conforme à l'une des revendications précédentes,
**caractérisé en ce que**
l'élément de fermeture à usage unique (F) est relié au boîtier (G) de sorte que l'ouverture (Ö) fermée par l'élément de fermeture à usages multiples (D) soit en outre fermée par cet élément de fermeture (F) à usage unique.

4. Feu de véhicule automobile conforme à l'une des revendications précédentes,
comprenant une première source de lumière et
une première ouverture (Ô) permettant de changer cette première source de lumière, la première ouverture (Ö) étant ou étant destinée à être fermée par l'élément de fermeture à usage unique (F).

5. Feu de véhicule automobile conforme à l'une des revendications précédentes,
comprenant :
une seconde source de lumière, et
une seconde ouverture (Ö) permettant de changer cette seconde source de lumière, la seconde ouverture (Ö) étant fermée ou étant destinée à être fermée par un élément de fermeture à usage multiples (D) et par un élément de fermeture à usage unique (F).

6. Feu de véhicule automobile conforme à l'une des revendications précédentes dans lequel le boîtier (G) comporte une première collerette (KF) entourant l'ouverture (Ö) s'étendant vers l'extérieur et avec laquelle l'élément de fermeture à usage unique (F) est relié ou peut être relié.

7. Feu de véhicule automobile conforme à l'une des revendications précédentes dans lequel le boîtier (G) comporte une seconde collerette (KD) entourant l'ouverture, s'étendant vers l'extérieur, et avec laquelle l'élément de fermeture à usages multiples (D) est relié ou peut être relié.

8. Feu de véhicule automobile conforme à l'une des revendications précédentes dans lequel l'élément de fermeture à usage unique comprend un film (F).

9. Feu de véhicule automobile conforme à l'une des revendications précédentes dans lequel l'élément de fermeture à usages multiples comprend un organe de fermeture à vis, à encliquetage à enclenchement ou par blocage.
